# EUROPEAN PATENT APPLICATION

(11) **EP 4 556 778 A1**
(43) Date of publication of application: **21.05.2025**
(21) Application number: 23210000.8
(22) Date of filing: 15.11.2023
(51) Int. Cl.: F16L 59/14, F24F 13/02

(54) **A METAL VENTILATION DUCT TO PREVENT THE SPREAD OF FIRE, SMOKE AND HEAT**

(71) Applicant: Smofir Trading Ltd, Dublin 12 Dublin (IE)
(72) Inventor: RENAGHAN, Michael, Blessington, W91RT26 (IE); AUDISIO, Enrico, 10042 Torino (IT); BERG, Ola, 269 73 Förslöv (SE); KARLSSON, Jesper, 282 72 Sösdala (SE)
(74) Representative: Zacco Sweden AB

(57) **Abstract**

The disclosure relates to a fire and heat protection system (100) for covering one or more ventilation air ducts (1) made of sheet metal, the fire and heat protection system comprising at least two layers (110, 120) of materials arranged around the ventilation air duct as insulation. The at least two layers (110, 120) are made by different materials or made by different compositions of the same material, wherein one or more first layers (110) and/or one or more second layers (120) encapsulate the ventilation air duct (1). The first layer (110) comprises insulation material. The second layer (120) is arranged in close proximity with or in contact with the first layer (110). The second layer (120) is made of a material making it flexible enabling it to be wrapped over and around the first layer (110) and the ventilation duct (1).

## Description

### Field of the Invention

The present disclosure relates to a fire and heat protection system for covering one or more ventilation air ducts made of sheet metal forming an air-proof casing and a thereby provided fire resistant ventilation air duct for being part of a fire and heat protection system. More specifically, the disclosure relates to a fire and heat protection system for covering one or more ventilation air ducts made of sheet metal forming an air-proof casing and a ventilation air duct for being part of a fire and heat protection system as defined in the introductory parts of the independent claims.

The present invention is applicable in the HVAC (Heating Ventilation and Air Conditioning) industry, where ventilation ductwork crosses fire compartments and must maintain the compartment rating for fire and smoke performance. The invention therefore relates to a fire and heat protection system for covering one or more ventilation air ducts made of sheet metal providing a new method of controlling the heat generated in a fire and reducing heat bridging between compartments.

### Background

A smoke control duct or a fire resisting duct are commonly used in buildings to prevent the spread of fire, or help control the thermal energy being developed by the fire, removing the smoke from the scene of the fire while preventing thermal radiation feedback.

Current offering are metal ducts with a heavy gauge (large thickness of metal), stiffeners externally and internally, with metal rods and bars to prevent the duct deforming under high temperatures. Chemical solutions are applied to the joints to seal the ducts. Insulation is applied to the duct in various thicknesses to delay the rise in temperature to the outside surface of the insulation often being mineral/rock wool. There is a correlation between the depth of insulation and the amount of fire protection in minutes. A typical market leader of fire resisting metal ducts, offering 120 minutes of delayed heat/fire propagation currently requires an additional 278 mm of additional space for the application of insulation, and at the penetration through one or more walls, a 304 mm space requirement.

Penetrations through compartments or rooms or similar spaces are by means of extending the ductwork through an opening between the compartments or rooms or spaces, and sealing the opening based on test evidence methods. Such penetration details are complex and require additional external supports to remain in place during a fire event. Site activity is very involved, requiring close supervision and validation back to manufacturer instructions to verify that the penetration(s) is/are correctly installed to fulfil fire and heat demands for such ductwork used for ventilation in buildings.

Mechanical contractors and Fire Engineers conduct multiple re-designs of ventilation routes based upon the penetration details requirements, and the amount of access needed to allow for the requisite levels of Insulation. Clashes' of services in limited spaces such as risers and ceilings delay construction progress and require significant supervision and planning. The performance of the current fire protection systems is dependent on low skilled operatives on site, and requires intensive supervision to check the quality and correctness of the final/finished installation. The existing offerings are high energy intensive solutions.

There is a need to deliver ventilation air systems comprising one or more ventilation duct sections suitable for fire and smoke applications which eliminates the need for excessive insulation, eliminates redesign requirements, eliminates extensive control of correctness of the installation before finishing it off and provides one or more simple penetration details or pieces that can be certified competently.

### Summary of the Invention

It is an object of the present disclosure to mitigate, alleviate or eliminate one or more of the above-identified deficiencies and disadvantages in the prior art and to solve at least the above-mentioned problem(s). According to a first aspect there is provided a fire and heat protection system for covering one or more ventilation air ducts made of sheet metal forming an air-proof casing, the fire and heat protection system comprising at least two layers of materials configured to be arranged around the ventilation air duct as insulation, wherein the at least two layers are made by different materials or made by different compositions of the same material, wherein one or more first layers and/or one or more second layers is/are configured to enclose/encapsulate the ventilation air duct(s), which first layer comprises an insulation material with a low thermal conductivity, and which second layer is configured to be arranged in close proximity with or in contact with the first layer and which second layer is made of a material making the second layer flexible enabling the second layer to be wrapped over and around the first layer and the ventilation duct(s), wherein the material of the second layer is impervious to liquid water and water vapour and configured to - when subjected to heat - undergo an endothermic reaction process, that the insulation material of the first layer comprises crystallized water particles that - when subjected to heat - are vapourised and released as water vapour in proportion to increase of heat and/or temperature and condensed in proportion to decrease of heat and/or temperature, whereby the water vapour impervious second layer retains water vapour and any condensed water between the second layer and the air-proof casing and inside the fire and heat protection system.

This solution capitalizes on the properties of water in a heat scenario, containing the maximum temperature rise while the water and/or water vapour remain(s) within the package, limiting the temperature rise on the outer surface of the duct section. This solution decreases the propagation of fire and heat from, through and/or out of each ventilation air duct thereby improving the whole fire and heat protection system.

According to some embodiments, the first layer is made of a material being at least partly made or mostly made or fully made of calcium silicate, Ca₂SiO₄, comprising the crystallized and/or embedded water particles/molecules.

This solution increases the time for reaching critical temperatures as the water when heated and until it is vaporized keeps the temperature constant or at least lower for a prolonged period of time compared to prior art fire protective insulation materials made of mineral/rock wool.

According to some embodiments, the insulation material of the first layer is a high-strength insulation material with a low thermal conductivity below about 600 - 650°C/degrees Celsius.

This solution prolongs the time of reaching critical temperatures as the insulation material of the first layer has the ability of "slowing down" any temperature rise for a longer period of time compared to prior art fire protective insulation materials made of mineral/rock wool.

According to some embodiments, at least a third material is arranged in close proximity with or in contact with the second layer and which third layer comprises a material configured to increase the durability and pressure resistance/proof of the second layer.

This solution increases the time for reaching critical pressure building up when the water - when heated - is vaporized, which critical pressure strains the second layer until it can no longer contain the water steam shelf, and water vapour escapes to the atmosphere. This solution prolongs the integrity of the second layer before it bursts/torns/breaks/splits/shatters/tatters open by enabling the second layer to withstand/hold together for a longer period of time before any water and/or water vapour is let/leaked out of the insulation.

According to some embodiments, the third material together with the second layer is/are arranged at least partly over and around the first layer and the ventilation duct.

This solution provides an improved encapsulation of water and water vapour.

According to some embodiments, the second layer comprises at least partly the third material and/or the third material is at least partly or fully integrated or embedded in the second layer.

This solution provides an enhanced/simplified handling of the second and third layers as those layers then are easier to manually handle, use and wrap around the first layer as these two layers, i.e. the second and third layer are at least partly held/kept/stuck/retained together reducing the effort of holding/transporting/moving both layers at the same time.

According to some embodiments, the third material is shaped as a thin layer. According to some embodiments, the third material is shaped as a layer and at least partly comprises glass fibre/fibreglass. According to some embodiments, the third material is shaped as a thin layer and at least partly comprises glass fibre/fibreglass.

This solution means that the third layer is embedded in the second layer, without adding additional thickness to the solution. In fact, this solution reduces the thickness of the insulation.

According to some embodiments, the third material is at least partly shaped as a net of glass fibre/fibreglass. According to some embodiments, the third material is at least partly shaped as a thin net of glass fibre/fibreglass.

This solution means that the third layer does not add more material and/or weight to the insulation than necessary, in fact, this solution optimizes/reduces the amount of material used in the insulation and/or the weight of the overall insulation as the net is fenestrated, i.e. provided with holes/non-solid and open areas.

According to some embodiments, the fire and heat protection system comprises one or more tunnel-shaped devices for penetrating or extending through one or more walls and/or floors for enabling ventilation air to flow from one or more ventilation ducts at one side of the wall and/or floor to one or more ventilation ducts at the other side of the wall and/or floor.

This solution means that the fire and heat protection system is easily expanded and forwarded into and between other areas/compartments/spaces/rooms enabling further improving the fire and heat protection in larger buildings or the like. The thermal bridge is broken and the tunnel-shaped penetration is an independent and separate component, secured to the wall/floor structure and enclosed in the wall/floor making for a reduced penetration detail. This solution decreases the propagation of fire and heat from, through and/or out of each ventilation air duct and any tunnel-shaped device and between those entities thereby improving the whole fire and heat protection system.

According to some embodiments, each tunnel-shaped penetration device is made of an air-proof enclosure interconnecting two ends, a first and a second end, wherein each of these ends comprises a metal flange configured to be connected to a ventilation air duct, and the air-proof enclosure between the two ends of each tunnel-shaped penetration device is stiff and/or stable in form and shape and made of the same material and/or material composition as the first layer of the fire and heat protection system.

This solution forms thermal breakage between the ends of each tunnel-shaped penetration device as each tunnel-shaped penetration device has no metal and/or heat conductive materials in physical connection between its two ends.

According to some embodiments, the second layer is configured to be arranged in close proximity with or in contact with the first layer wrapped around the ventilation duct, which second layer is made as a flexible blanket or thin covering configured to be wrapped over and around the first layer and having ends forming only one joint extending along the length of the ventilation duct by abutting end to end after wrapping.

According to some embodiments, each joint between each end and flange of each ventilation duct - after joining together the ventilation duct to another ventilation duct end-to-end and after each ventilation duct and its air-proof casing are encapsulated by the first and second layers - is configured to be covered by a separate and flexible elongated insulation strip of the same insulation material as the first layer.

According to some embodiments, each joint between each end and flange of each tunnel-shaped penetration device and each end and flange of each ventilation duct - after joining together each ventilation duct and each tunnel-shaped penetration device end-to-end and after each ventilation duct and its air-proof casing are encapsulated by the first and second layers - is configured to be covered by a separate and flexible elongated insulation strip of the same insulation material as the first layer at each end of the floor/wall.

According to some embodiments, each separate and flexible elongated insulation strip is configured to at least partly cover each end of each ventilation duct and/or each end of each tunnel-shaped penetration device and/or each floor/wall.

According to some embodiments, each joint between each ventilation air duct and/or between each ventilation air duct and each tunnel-shaped penetration device comprises one or more sealing strips arranged between the flange(s) at each joint, each sealing strip being made of the same material and/or material composition as the first layer.

These solutions of wrapping one or more first and/or second layers and/or separate insulation strips around the air-proof casing(s) of the ventilation duct(s) and/or the joints and/or introducing sealing strips between the ventilation ducts and/or the tunnel-shaped penetration devices decrease the propagation of fire and heat from, through and/or out of each ventilation air duct and tunnel-shaped penetration device thereby improving the performance of the whole fire and heat protection system.

According to a second aspect there is provided a ventilation air duct for being part of a fire and heat protection system according to any aspect and embodiment of the disclosure, which ventilation air duct is made of sheet metal forming an air-proof casing and enclosed/encapsulated by the fire and heat protection system comprising at least two layers of materials covering the ventilation air duct as insulation, wherein the at least two layers are made by different materials or made by different compositions of the same material, wherein one or more first layers and/or one or more second layers enclose and/or encapsulate the ventilation air duct, the first layer comprising an insulation material with a low thermal conductivity, and the second layer being configured to be arranged in close proximity with or in contact with the first layer, which second layer is made of a material making the second layer flexible enabling wrapping the second layer over and around the first layer and the ventilation duct, wherein the material of the second layer is impervious to liquid water and water vapour and configured to - when subjected to heat - undergo an endothermic reaction process, that the insulation material of the first layer comprises crystallized water particles that - when subjected to heat - are vapourised and released as water vapour in proportion to increase of heat and/or temperature and condensed in proportion to decrease of heat and/or temperature, whereby the water vapour impervious second layer retains water vapour and any condensed water between the second layer and the air-proof casing and inside the fire and heat protection system.

This solution decreases the propagation of fire and heat from, through and/or out of each ventilation air duct thereby improving the performance of the whole fire and heat protection system.

According to some embodiments, the first and second layers of the fire and heat protection system are separate layers.

This solution provides the ability to assemble the layers onto the ventilation air duct separately reducing the complexity of manufacture of the layers and provides the ability to replace each layer separately if needed, such as when broken or damaged or the like. This solution provides the ability to construct the ventilation duct section in a factory-controlled environment eliminates the risks associated with on-site constructed solutions. This solution provides the ability to perform calibrated measurements, and careful construction in a controlled environment eliminating the dependence on low skilled operatives on site, reducing and eliminating inconsistent construction subject to site conditions.

According to some embodiments, the air-proof casing of each ventilation air duct comprises at least one outer/external holder configured to enable the first and second layers of the fire and heat protection system to be attached and/or securely held to the outside of the ventilation air duct.

This solution provides a more robust and durable assembly and keeping of the layers together and onto the ventilation air duct. A smoke and fire duct section is delivered as a complete unit and/or module to the end user without the need to add additional fixings.

According to some embodiments, each ventilation air duct comprises a flange at each end enabling connection end to end to a corresponding flange of one other ventilation duct at each end by means of separate connectors or clamping means, which connectors comprises a clamp engaging/gripping over the flange on the ends of the ventilation ducts to hold the ends of the ventilation ducts together as a joint and a fastener that extends in parallel with the longitudinal direction of the ventilation duct or extends at an angle away from the direction of extension of the flange and the casing of the ventilation duct, e.g. the fastener extends perpendicular from the direction of extension of the flange and the surface of the air-proof casing of the ventilation duct.

This solution provides a less demanding assembly of the connectors and fasteners as those are more easily accessible from the outside.

According to some embodiments, the ventilation air duct comprises a flange at each end enabling connection end to end to a corresponding flange of another ventilation duct at each end forming a joint between the ends, which joint comprises at least one sealing strip arranged between the flange, the sealing strip being made of the same material and/or material composition as the first layer.

According to some embodiments, each joint between each ventilation air duct and/or between each ventilation air duct and each tunnel-shaped penetration device comprises one or more sealing strips arranged between the flange(s) at each joint, each sealing strip being made of the same material and/or material composition as the first layer and having an adhesive at at least one side to enable fastening to at least one flange.

This solution enhances the sealing by providing a prolonged sealing effect and more delayed propagation of fire and heat through the joints between ventilation ducts and/or ventilation ducts and tunnel-shaped penetration devices.

According to some embodiments, the first layer comprises a high-strength insulation material with a low thermal conductivity below about 600 - 650°C/degrees Celsius.

This solution prolongs the delay of propagation of fire and heat from/between and out of the ventilation ducts and/or the tunnel-shaped penetration devices and thereby in the whole fire and heat protection system.

According to a third aspect, there is provided a tunnel-shaped device for use in the fire and heat protection system of the first aspect and/or for use together with the ventilation air duct of the second aspect and any of the associated embodiments, wherein the tunnel-shaped device comprises an air-proof and fire-resistant enclosure and is configured to penetrate or extend through one or more walls and/or floors for enabling ventilation air to flow from one or more ventilation ducts at one side of the wall and/or floor to one or more ventilation ducts at the other side of the wall and/or floor.

According to some embodiments, the air-proof and fire-resistant enclosure of the tunnel-shaped penetration device is configured to interconnect two ends, a first end and a second end, wherein each of these ends comprises a metal flange configured to be connected to a ventilation air duct, and the air-proof enclosure between the two ends of each tunnel-shaped penetration device is stable in form and shape and made of the same material and/or material composition as the first layer of the fire and heat protection system.

According to some embodiments, the air-proof enclosure between the two ends of each tunnel-shaped penetration device is made of stiff and/or rigid and/or hard plates tightly joined together to form the air-proof enclosure, which plates are made of the same material and/or material composition as the first layer of the fire and heat protection system and/or the ventilation air duct.

According to some embodiments, the tunnel-shaped device comprises at least two through holes in at least each of two opposite sides of the air-proof and fire-resistant enclosure, which at least four through holes are configured to receive at least one fastener each extending through the thickness of the air-proof and fire-resistant enclosure to enable secure fastening of the tunnel-shaped device to the floor/wall.

This solution provides a durable, robust and dimensionally stable tunnel-shaped penetration device that at the same time has an enhanced fire protection.

According to the first aspect and/or the second aspect and/or the third aspect and any embodiment of any of the first and second and third aspects, the first layer is configured to be arranged in close proximity with or in contact with the air-proof casing of the ventilation duct, which first layer is flexible and has a mat or mattress shape enabling wrapping this first layer over and around the air-proof casing of the ventilation duct and having ends forming only one joint extending along the length of the ventilation duct by abutting end to end after wrapping.

According to some embodiments, the joints between abutting ends of the first layer and/or the second layer of the fire and heat protection system are fully covered by fire resistant adhesive tape to close and seal these joints. According to some embodiments, fire resistant adhesive tape is used to close and seal any joints and adjoining transition areas/surfaces between and at/over any ventilation duct and ventilation duct ends and/or between and at/over any tunnel-shaped penetration device and tunnel-shaped penetration device ends and/or between and at/over any area/surface/part of any wall/floor adjoining any ventilation duct and/or tunnel-shaped penetration device. According to some embodiments, adhesive tape is used to close and seal any joints between any ventilation duct and/or any tunnel-shaped penetration device and/or any adjoining wall/floor area/surface/part and to attach and hold those joints together and also to attach, hold any separate and flexible elongated insulation strip securely and in a sealed manner as part of the fire and heat protection system and to seal and close any joints at the sealed separate and flexible elongated insulation strip.

This further improves the fire protection by both delaying penetration of vapour, smoke and/or heat through these joints while holding the layers and their ends and/or any separate and flexible elongated insulation strip together around the air-proof casing.

Effects and features of the second and third aspect are to a large extent analogous to those described above in connection with the first aspect and vice versa. Embodiments mentioned in relation to the first aspect are largely compatible with the second and/or the third aspect and the embodiments of the second and/or third aspect, i.e. embodiments mentioned in relation to the second aspect are largely compatible with the first and/or third aspect and the embodiments of the first and/or the third aspect and vice versa as these entities, such as the ventilation duct(s) and tunnel-shaped penetrator(s), are combinable in many different and varying constellations making up one or more or many differently designed, sized, shaped, laid-out and installed fire and heat protection systems.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the systems, devices and ventilation air ducts described or steps of the methods described since such entities and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a system/device/piece/duct/unit" or "the system/device/piece/duct/unit" may include several entities/devices, and the like. Furthermore, the words "comprising", "including", "containing" and similar wordings does not exclude other elements or steps.

Terminology -- The term "insulation" is to be interpreted as fire, flame, temperature and heat insulation and "impervious" is to be interpreted as waterproof or impenetrable or impermeable in regard of liquid water and water vapour and/or water molecules.

### Brief description of the drawings

The invention will now be explained in further detail with reference to the drawings showing aspects thereof.
Figure 1 is a perspective view of a ventilation air system comprising one or more ventilation ducts provided with layers of fire-resistant materials according to the invention.
Figure 2A is a perspective view of a square-shaped un-insulated ventilation duct of fig. 1.
Figure 2B is a perspective view of two square-shaped un-insulated ventilation ducts interconnected end-to-end at one end.
Figure 3 is a perspective view of the square-shaped ventilation duct of fig. 2A when being insulated for improved fire-resistance before being assembled into the ventilation air system of fig. 1 as a part thereof according to the invention.
Figure 4 is a cross-section view along line A-A in fig. 3 of insulation layering and endothermic protective covering when enclosing/encapsulating the ventilation duct(s) with more rounded corners than in figs. 1 to 3 according to an embodiment of the invention.
Figure 5 is a cross-section view along line A-A in fig. 3 of insulation layering and endothermic protective covering when enclosing/encapsulating the square-shaped duct(s) with more rounded corners than in figs. 1 to 3 according to another embodiment of the invention.
Figure 6 is a cross-section view along line A-A in fig. 3 of insulation layering and endothermic protective covering when enclosing/encapsulating the square-shaped duct(s) of figs. 1 to 3 according to yet another embodiment of the invention.
Figure 7 is a perspective view of a tunnel-shaped penetration device configured to extend through the thickness of one or more walls and/or floors and/or roofs/ceilings as a wall/floor transition element enabling ventilation air to flow via ventilation air ducts between different spaces/compartments/rooms/areas according to the invention as shown in fig. 1.
Figure 7A is a cross-section view of the tunnel-shaped penetration device of figs. 1 and 7 (along line C-C in fig. 7 and G-G in fig. 1) when assembled in/to and through a floor and/or wall as shown in fig. 1 according to the invention.
Figure 7B is a cross-section view of a part of the assembled tunnel-shaped penetration device of figs. 1, 7 and 7A according to cut-out D in fig. 7A when connected to ventilation ducts end-to-end/flange-to-flange at each end after assembly of end flanges of two ventilation duct(s) to the end flanges of the penetration device(s) of figs. 7 and 7A after sealing of the joints between the end flanges and between the transition areas of the ducts, the tunnel-shaped penetration device and the floor/wall according to the invention.
Figure 7C is a perspective view according to cut-out F in fig. 7A of a part of the tunnel-shaped penetration device of figs. 7, 7A and 7B and a part of the wall and/or floor to which the tunnel-shaped penetration device is assembled by fastening means used according to the invention.
Figure 8 is a perspective view of part of the two square-shaped ventilation ducts of fig. 2B interconnected end-to-end at one end but now insulated according to the invention.
Figure 9 is a perspective view of part of three square-shaped ventilation ducts of figs. 2B and 8 along line E-E interconnected end-to-end at one end and insulated according to the invention.
Figure 10 is a cross-section view of a ventilation duct connection, end-to-end/flange-to-flange after assembly of end flanges of two of the ventilation duct(s) (one duct being shown in fig. 3) together along line E-E according to fig. 8 together with one of several clamping means before a final insulation over the joint between the ends of the two ventilation ducts according to the invention.
Figure 11 is a cross-section view of the ventilation duct connection of fig. 10 after the final insulation over the end joint between the two ventilation ducts according to the invention.
Fig. 12 is a perspective view of the square-shaped ventilation duct of fig. 3 when complemented with one or more end sealings for improved fire-resistance before being assembled into the ventilation air system of fig. 1 and/or interconnected end-to-end with another ventilation duct 1 as in fig. 8 as a part thereof according to the invention.

### Detailed description

The present disclosure will now be described with reference to the accompanying drawings 1 to 12, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

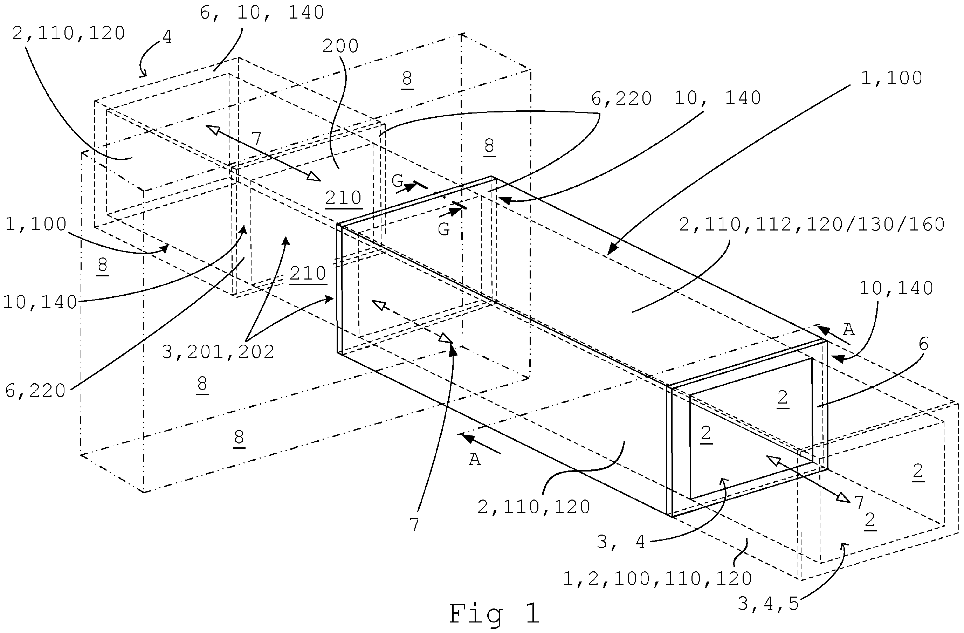

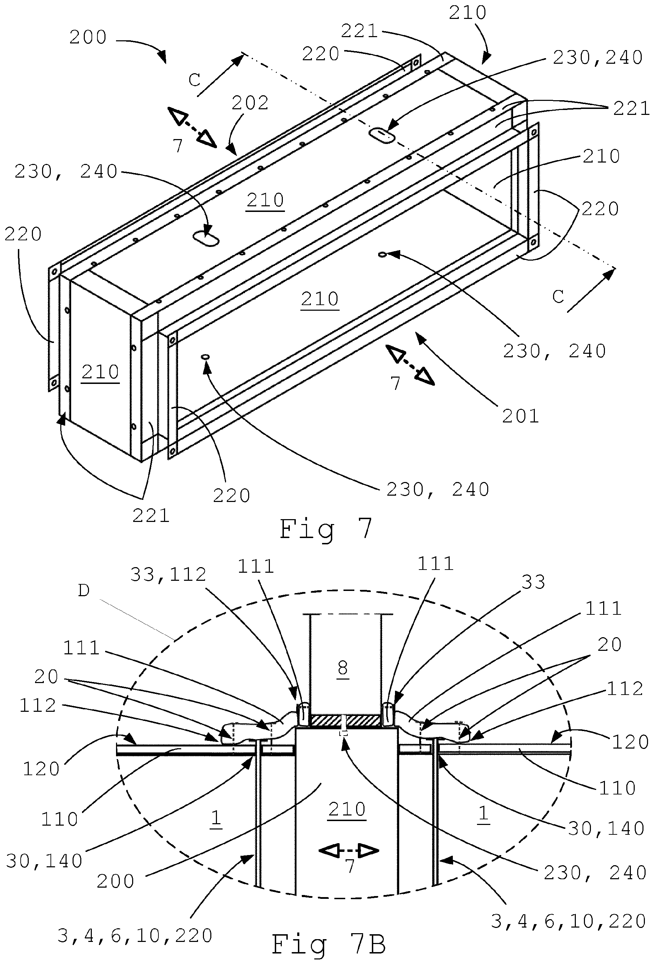

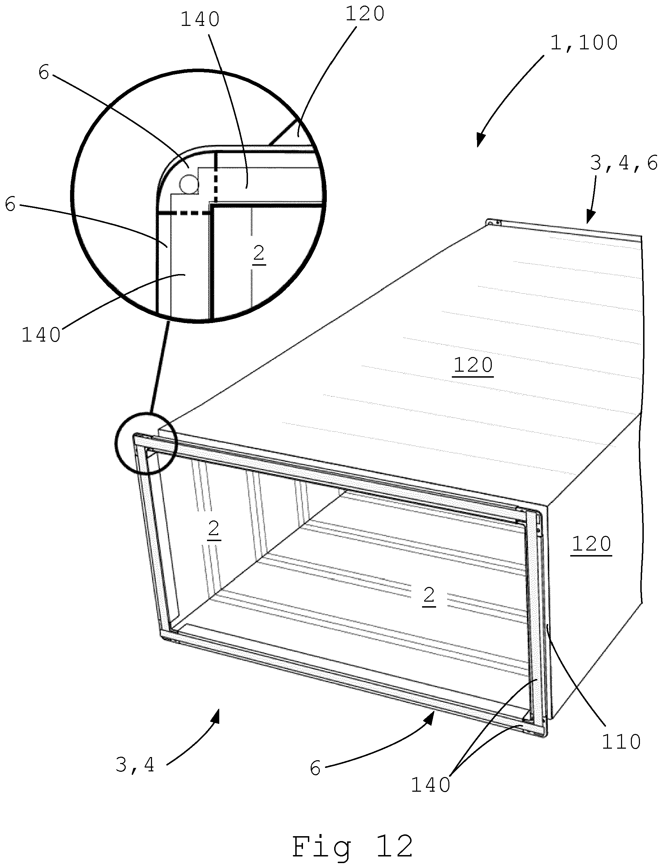

Figure 1 shows an embodiment of a fire and heat protection system 100 to improve the fire-proof/-resistance of ventilation air systems comprising one or more ventilation air ducts 1 made of metal. The ventilation air ducts 1 are in some embodiments (not shown) round or circular and in some embodiments (shown) square or rectangular or quadratic, i.e. metal ducts with corners, for air flow 7. Each ventilation duct 1 comprises a flange 6 at each end 3, 4 as shown in figs. 1 to 3, 7B, 8, 9, 10, 11 and 12. This enables connecting ventilation air ducts 1 end to end. In some embodiments (not shown), one or more of the ventilation ducts 1 is/are without flanges and are configured to be connected end to end by means of separate connectors (not shown). Each ventilation duct 1 is configured to be detachably connected to at least one other ventilation duct 1 and/or tunnel-shaped penetration device 200 end to end as shown in figs. 1 and 7B.

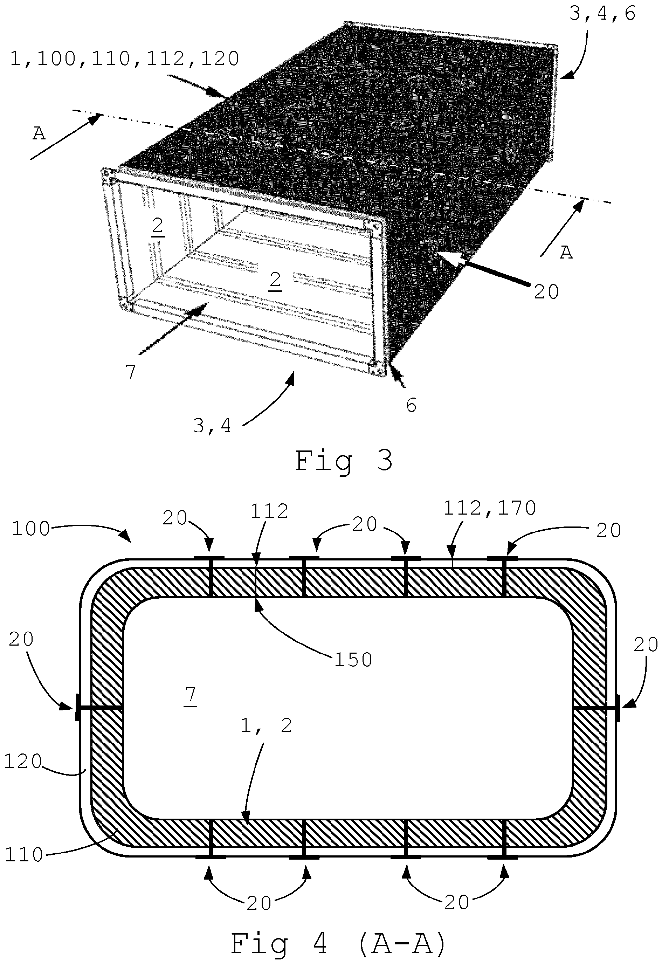

The first aspect of this disclosure shows the fire and heat protection system 100 for covering one or more ventilation air ducts 1 made of sheet metal forming an air-proof casing 2 in figs. 1, 3, 4, 5, 6, 7B, 8, 9, 10, 11 and 12. This fire and heat protection system 100 comprises at least two layers 110, 120 of insulating materials as shown in figs. 4, 5, 6, 7B, 8, 9, 10, 11 and 12. The layers 110, 120 are arranged around the ventilation air duct 1 to form a sealed outer coverage as a fire, flame and heat insulation. In the disclosure, the at least two layers 110, 120 are made by different materials or made by different compositions of the same material. The layers 110, 120 are one or more first layers 110 and/or one or more second layers 120 as shown in figs. 4, 5, 6, 7B, 8, 9, 10, 11 and 12. In some embodiments, there are at least two first layers 110 and at least two second layers 120 and/or third layers 130 and/or more layers 160 and/or strips 111 around or at least partly wrapped around the ventilation air duct(s) 1 as shown in figs. 3 to 6, 7B, 8, 9, 10, 11 and 12 and/or wrapped partly around parts, i.e., ends 201, 202/flanges 220 of a tunnel-shaped penetration device as shown in fig. 7B.

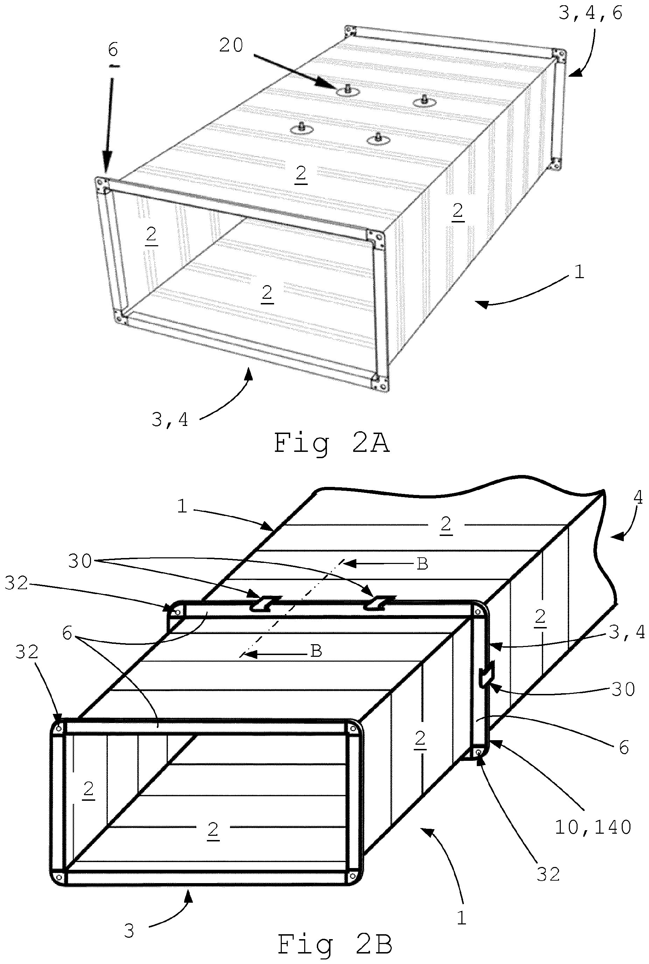

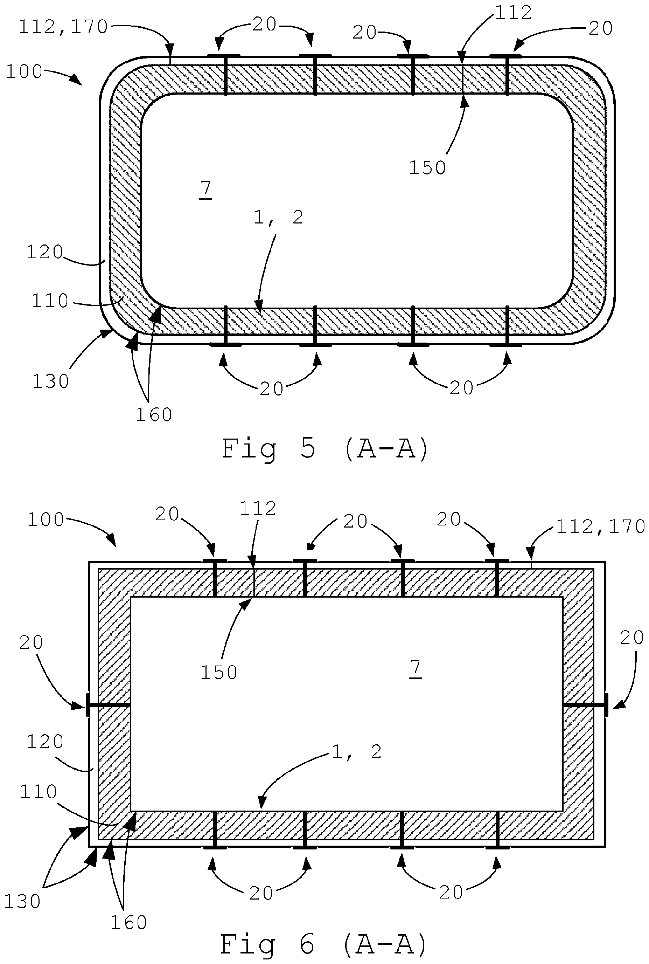

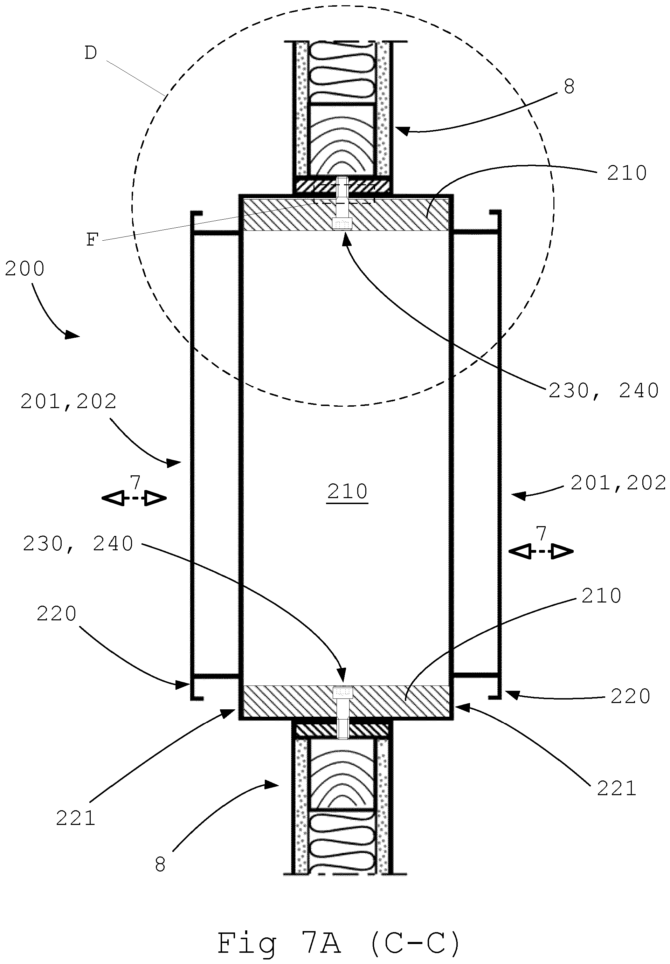

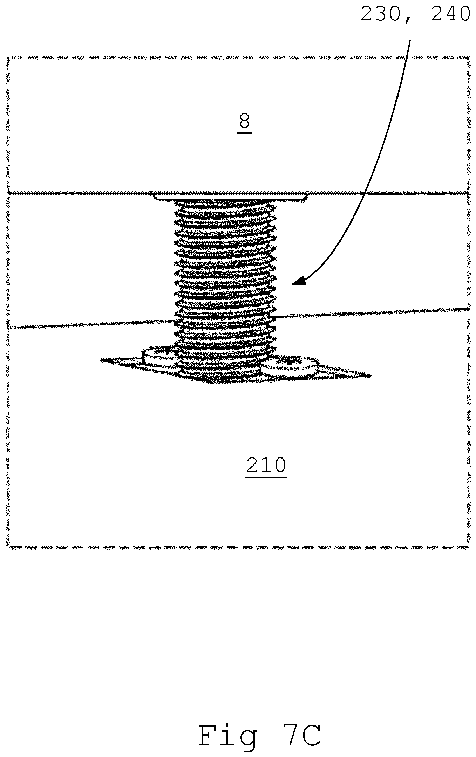

In figs. 2A and 2B, there is shown a ventilation air duct 1 before it is insulated (see fig. 2A) and two interconnected ventilation ducts 1 (see fig. 2B) before they are insulated by means of the fire and heat protection system 100 according to the invention (preferably each ventilation duct 1 is insulated by one or more first layers 110 and one or more second layers 120 before being connected end-to-end with one or more other ventilation ducts 1 and/or one or more tunnel-shaped penetrators 200 as shown in figs. 1, 3 to 4, 7B, 8, 9, 10, 11 and 12, and - in some embodiments - one or more third layers 130 and/or one or more other layers 160 are added to the other first and second layers 110, 120 depending on application as shown in figs. 5 and 6). In figs. 2A and 2B, there is shown one single ventilation air duct 1 before being insulated in fig. 2A and one ventilation duct 1 detachably connected with one end 3, 4 to the end 3, 4 of at least one other ventilation duct 1 in fig. 2B forming one end joint 10 before being insulated according to the invention. In fig. 3, there is shown a ventilation air duct 1 after being insulated by means of the fire and heat protection system 100 as a separate fire-resistant ventilation duct module according to the invention. As shown in fig. 3, each ventilation air duct 1 and each fire and heat protection system 100 comprising at least two layers 110, 120 over each air-proof casing 2 of each ventilation duct 1 together form a common unit after assembly to function as a separate and pre-assembled module to be transported to a site and thereafter be detachably assembled as a part of a ventilation air system to make it up as shown in fig. 1 according to the invention. The same goes for each tunnel-shaped penetration device 200 shown in fig. 7, i.e. one or more such tunnel-shaped penetration devices 200 also functions as a separate and pre-made/assembled module to be transported to a site and there be detachably assembled into a ventilation air system as shown in fig. 1 according to the invention. In some embodiments, such a ventilation air system as shown in fig. 1 comprises no such tunnel-shaped penetration device 200 or comprises only one or more such tunnel-shaped penetration devices 200. In some embodiments, one or more such tunnel-shaped penetration devices 200 connects one or more or all areas or spaces or compartments or rooms by extending through one or more walls or floors 8 to form and fluidly interconnect all ducts and parts in ventilation air systems extending from and between more than one area/space/compartment/room/office similar to the one shown in fig. 1.

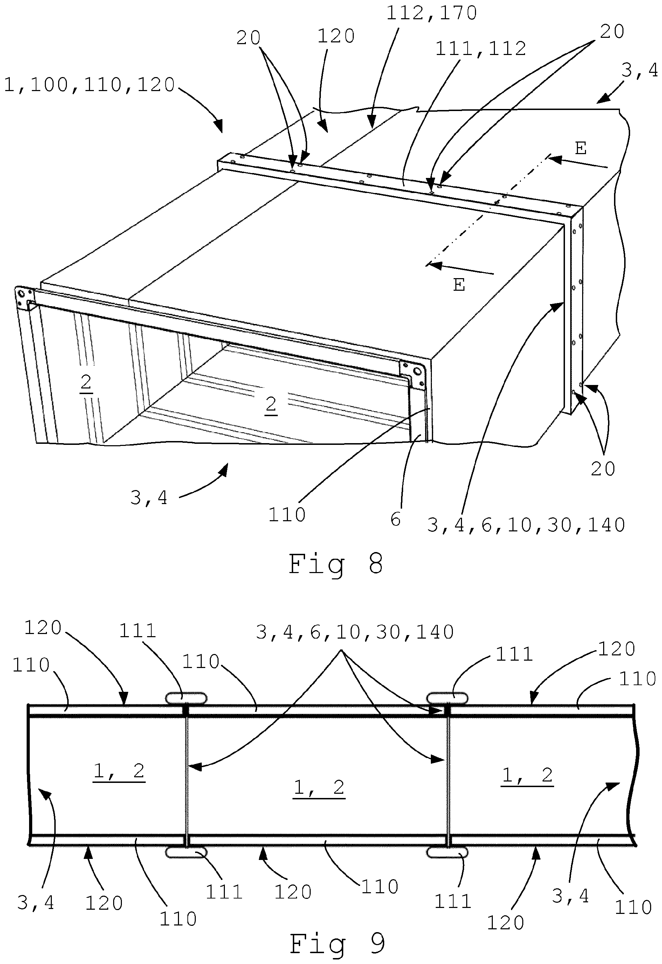

Figs. 3, 4, 5, 6 and 12 show when a ventilation air duct 1 is enclosed or encapsulated by the fire and heat protection system 100 as explained above as the separate and partly pre-made module and/or before being assembled as a part of a ventilation air system or disassembled/removed from the ventilation air system. Figs. 4, 5 and 6 show - in cross-section along lines A-A in figs. 1 and 3 - the ventilation air duct 1 when enclosed or encapsulated by the fire and heat protection system 100. Figs. 7B, 8, 9, 10 and 11 show - in full and part cross-sections - a ventilation air duct 1 when enclosed or encapsulated by the fire and heat protection system 100 and assembled end to end with one or more other ventilation air ducts 1 and/or tunnel-shaped penetration devices 200 to form part of a ventilation air system as the one in fig. 1 when the joints 10 between the ends 3, 4, 201, 202 of the ventilation air duct(s) 1/tunnel-shaped penetration device(s) 200 have been covered by the fire and heat protection system 100 after ends of the ventilation air duct(s) and/or tunnel-shaped penetration device(s) are detachably connected together in a sealed way. In all embodiments, fire-resistant adhesive tape 112 is used for closing/sealing joints 150 and 170 between abutting ends of layers 110, 120, 130, 160 and/or when attaching one or more elongated strips 111 partly to and over one or more adjoining/adjacent outer/second/third layers 120/130 and to seal joining edges and/or sides and/or areas and/or surfaces between the elongated strip 111 and any adjoining and/or inner and/or outer and/or first and/or second and/or third layer 110, 120, 130 and/or parts/surfaces of any tunnel-shaped penetrators 200 and/or any adjoining parts/surfaces/areas of any floor/wall 8 to further improve and prolong the fire resistance of the fire and heat protection system 100, see in particular figs. 1, 3 to 6, 7B, 8, and 11 (fig. 9 shows the joints 10 and elongated strips 111 before being taped over by the adhesive tape 112). The thickness of layers 110, 120, 130, 160 as shown in figs. 4 to 6 are not to scale to enhance the visibility of the wrapped layers, however, the first layer 110 is shown in closer proportion to its actual thickness corresponding closely to the protruding or radial length of the flanges 6, 220 but the second layer 120 may be seen as thicker in these figs. in proportion to its actual thickness. However, the shown proportions of all these entities in all figs. of the disclosure may vary and do not resemble the actual dimensions of the used entities, hence, the shown proportions are not in any way limiting the possible actual dimensions of any of the entities.

This module of a combination of a ventilation air duct 1 and the fire and heat protection system 100 simplifies pre-planning of ventilation air systems, such as in fig. 1, as the ventilation air duct-and-fire and heat protection system modules 1 and/or 200 of figs. 3 and 7 then can be pre-assembled and stored and delivered as a part of the ventilation air system when to be set-up/assembled on site.

According to the disclosure, the first layer 110 of the fire and heat protection system 100 comprises an insulation material with a low thermal conductivity below temperatures of about 600 - 650 °C/degrees Celsius. In some embodiments, the first layer 110 of the fire and heat protection system 100 comprises a high-strength insulation material with a low thermal conductivity below temperatures of about 600 - 650 °C/degrees Celsius. In some embodiments, this first layer 110 of insulation material as part of the fire and heat protection system 100 is a flexible wrap for wrapping over the ventilation air duct 1, i.e. to cover its air-proof casing 2, see figs. 3, 4, 5, 6, 8, 9, 10, 11 and 12. According to the disclosure, the first layer 110 is a flexible mat or mattress for wrapping over the air-proof casing 2 of the ventilation duct 1. In some embodiments, this first layer 110 of high-strength insulation material as part of the fire and heat protection system 100 is shaped as the ventilation air duct 1, or at least partly shaped or very closely shaped as the ventilation air duct 1 by being flexible so that the wrapping follows and covers the outer mantle surface of the air-proof casing 2 when put, i.e., laid and wrapped around and over the ventilation air duct 1, i.e. to cover its air-proof casing 2, see figs. 4 to 6. In some embodiments, this first layer 110 of the high-strength insulation material as part of the fire and heat protection system 100 and/or a ventilation duct 1 is applied as a complete cover with only one joint 150 formed by abutting ends of the first layer 110 when cut into a correct length corresponding to and on the outer/external/exposed circumference of the air-proof casing 2 of the ventilation air duct 1 at wrapping, e.g. as shown to the upper left in figs. 4 and 6 and to the upper right in fig. 5 to cover the air-proof casing 2 in whole, with only one joint 150 formed by the ends of the mat or wrap 110 abutting each other tightly. The only end joint 150 of this first layer 110 extends along the longitudinal direction, i.e., the length of the ventilation duct 1. In some embodiments, the joint 150 for the first layer 110 is arranged 200 mm from one edge on the long side of the ventilation duct 1, however, this distance could be between 100 - 500 mm from a long side edge of the ventilation duct 1 depending on the dimensions of the ventilation duct. This end joint 150 of the first layer or mattress 110 is closed off in a sealing manner by the adhesive tape 112 while this adhesive tape also holds the two abutting ends of the first layer or mattress 110 together in close contact with each other.

In some embodiments, the second layer 120 and/or optionally the third layer 130 and/or optionally any other layer 160 when being part of the fire and heat protection system 100 and/or a ventilation duct 1 is applied as an at least partly covering wrap or a complete cover of the first layer or mattress 110 with only one joint 170 formed by abutting ends of the second layer or blanket or thin covering 120 (and/or third layer 130 and/or other layer 160) when cut into a correct length corresponding to and on and over the outer/external circumference of the first layer/mattress 110 wrapped over the air-proof casing 2 of the ventilation air duct 1 before the second layer/blanket 120 is wrapped over the first layer/mattress 110, e.g. as shown to the upper right in figs. 4 and 6 and to the upper left in fig. 5 to cover the first layer/mattress 110 and thereby indirectly covering the air-proof casing 2 in whole, with only one joint 170 formed by the ends of the second layer or blanket or thin covering/wrap 120 abutting each other tightly. The only end joint 170 of this second layer or blanket 120 extends along the longitudinal direction, i.e., the length of the ventilation duct 1. In some embodiments, the joint 170 for the second layer or blanket 120 is arranged 200 mm from one edge on the long side of the ventilation duct 1, however, this distance could be between 100 - 500 mm from a long side edge of the ventilation duct 1 depending on the dimensions of the ventilation duct. This end joint 170 of the second layer or blanket 120 is closed off in a sealing manner by adhesive tape 112 while this adhesive tape also holds the two abutting ends of the second layer or blanket 120 together in close contact with each other. Figure 5 shows - in cross-section - a squared- or rectangular-shaped fire-resistant insulated ventilation duct 1 with rounded corners (similar rounded cross-section contour as in fig. 4) making up another embodiment of the fire and heat protection system 100 comprising one or more fire-proof wrappings/enclosures/layers 130, 160 beside the first and the second layers 110, 120 around the ventilation duct(s) 1. In some embodiments, this additional layer(s) 130, 160 could be thicker or thinner as foil and for example be aluminum foil or fiberglass scrim wrapping for easy use similar to an outer/external layer.

In some embodiments (not shown), the fire-resistant insulated ventilation duct 1 is shaped with a quadratic cross-section.

Figure 7 is a perspective view of a squared- or rectangular shaped penetration device 200 being a wall and/or floor 8 transition element called tunnel-shaped penetration element according to the disclosure. This tunnel-shaped penetration element 200 could in another aspect of the disclosure be rounded and/or circular in cross-section (not shown). The tunnel-shaped device 200 for use in the fire and heat protection system 100 comprises an air-proof and fire-resistant enclosure 210. The tunnel-shaped device 200 is configured to penetrate or extend through one or more walls 8 and/or floors 8 for enabling ventilation air 7 to flow from one or more ventilation ducts 1 at one side of the wall and/or floor to one or more ventilation ducts 1 at the other side of the wall and/or floor, see figs. 1, 7, 7A, and 7B. The air-proof and fire-resistant enclosure 210 of the tunnel-shaped penetration device 200 is configured to interconnect two ends 201, 202. The tunnel-shaped device 200 comprises a first end 201 and a second end 202 interconnected by the air-proof and fire-resistant enclosure 210. Each of these ends 201, 202 comprises a metal flange 220 configured to be connected to a ventilation air duct 1. The air-proof and fire-resistant enclosure 210 between the two ends 201, 202 of each tunnel-shaped penetration device 200 is stable in form and shape. The air-proof and fire-resistant enclosure 210 is made of the same material and/or material composition as the first layer 110 of the fire and heat protection system 100. The air-proof and fire-resistant enclosure 210 between the two ends 201, 202 is made of stiff and/or rigid and/or hard plates made of the same material and/or material composition as the first layer 110 of the fire and heat protection system 100. These hard plates of the air-proof and fire-resistant enclosure 210 are tightly joined together to form the air-proof enclosure 210. The tunnel-shaped device 200 comprises at least two through holes 230 in at least each of two opposite sides of the air-proof and fire-resistant enclosure 210, see figs. 7 - 7C where two holes 230 are shown in the top plate and two holes 230 are shown in the bottom plate of the air-proof and fire-resistant enclosure 210. The at least four through holes 230 are configured to receive at least one fastener 240 each. Each fastener 240 is configured to extend through the thickness of the air-proof and fire-resistant enclosure 210 to enable secure fastening of the tunnel-shaped device 200 to the floor/wall 8 as shown in figs 7A, 7B and 7C. There could - in other embodiments - be used more than two through holes 230 at/in each pairwise plates or sides, this number of holes and thereby fasteners 240 (one for each hole 230) depend on the dimensions of the tunnel-shaped device 200, i.e., the larger or wider tunnel-shaped device 200 the more holes 230 and fasteners 240 are needed and vice versa.

In some embodiments, the first layer 110 is made of calcium silicate, Ca₂SiO₄ being in an essentially crystalline formation with more air space than solid space (greater than 90 percent air) with the crystallized water particles encapsulated therein.

In some embodiments, see e.g. figs. 5 and 6, the fire and heat protection system 100 comprises a third material 130 being at least partly or wholly integrated in the second layer 120 or the third material 130 is at least partly or fully embedded in the second layer 120. In some embodiments, this third layer 130 is flexible and configured to be at least partly wrapped over and around the first layer 110 and thereby also the ventilation duct 1. In some embodiments, this third layer 130 is flexible and configured to be at least partly wrapped over and around the first layer 110 and/or the second layer 120 to enclose the inner layer(s) and thereby also the ventilation duct 1. In some embodiments, this third material 130 is arranged in close proximity with or in contact with the first 110 and/or the second layer 120 to work as a reinforcement of the first 110 and/or the second layer 120 by increasing the durability and pressure resistance/proof of the first 110 and/or the second layer 120 providing the first 110 and/or the second layer 120 with better tear resistance and an improved ability to stretch from a first or original shape and flex back into the first and original shape without breaking when pressure builds up between the air-proof casing 2 and the first 110 and/or the second layer 120 due to the increased amount of condensed water and water vapour during a fire incident. In some embodiments, this third layer 130 is preferably configured and arranged to improve the strength and endurance of the second layer 120 but could in other embodiments improve the strength and endurance of both the first layer 110 and the second layer 120 by indirectly increasing the strength and endurance of the innermost first layer 110 as the third layer 130 is in contact with the intermediate second layer 120 to improve the ability of the second layer 120 to withstand the increasing water vapour pressure inside the insulation in the first layer 110. The embodiments shown in figs. 3, 4, 7B, 8, 9, 10, 11 and 12 could also comprise one or more third layers 130, even though no such third layer 130 is shown on those figs. In some embodiments, as shown in figs. 5 and 6, a further or additional layer 160 could be added, which further layer 160 may have the same or similar characteristics and features as the second layer 120 and/or the third layer 130 and vice versa.

In figs. 2A, and 3 to 6, 7B, 8 and 11, the ventilation air duct 1 according some embodiments is shown with one or more holders 20 attached to the outside of the air-proof envelope/casing/surface 2 of the ventilation air duct. Each holder 20 comprised an elongated stem with two ends, a first end attached to the outside of the air-proof casing 2 and one free end to be accessible from the outside of the fire and heat protection system 100 when covering the ventilation duct 1. This free end of each holder 20 is then provided with a plate-shaped head to hold the outermost layer, i.e. either the second layer 120 or the third layer 130 - if those two layers are separate - or to hold both these layers - when these two layers 120 and 130 are at least partly kept/stuck/integrated/embedded together if the third layer is at least partly part of the second layer 120 - to and against the first layer 110 (or another layer 160 if more than two or three layers 110, 120 and/or 130 are part of the fire and heat protection system 100). The plate-shaped head of the free end of each holder 20 provides distributing any forces from the pressure build-up between the air-proof casing 2 and the first layer 110 and/or the second layer 120 and/or the third layer 130 and/or further layer 160 and/or a pair or three or more or all of those layers due to an increased amount of condensed water and water vapour during a fire incident over a larger area/surface, thereby further improving the durability of the second layer(s) 120 and/or the third layer(s) 130 and/or the additional layer(s) 160.

The penetration piece or lead-through or element 200 of figs. 1, 7, 7A and 7B is configured to form a fire-resistant channel/tunnel with two ends 201, 202 to let ventilation air 7 through a wall/floor 8 and to act as a thermal breakage from one side of a wall/floor 8 to the other side of the wall/floor during a fire incident affecting the ventilation air system, e.g. shown in fig. 1. This tunnel-shaped penetration element 200 acts in fact as a short ventilation air duct enabling ventilation air 7 to flow through the wall, floor 8 or the like from one side to the other/opposite side or vice versa while forming the thermal breakage as tunnel-shaped penetration element 200 has no metal in physical connection between its two ends 201, 202, i.e. the air-proof casing 210. Each end 202, 202 is configured to connect end to end to a ventilation duct 1 at one side of the wall/floor 8. One or a first end 3, 4 of one or a first ventilation air duct 1 is connected to one or a first end 201, 202 of the tunnel-shaped penetration element 200 at one or a first side of the wall/floor 8 opposite another or a second end 201, 202 of the tunnel-shaped penetration element 200 at the other or second side of the wall/floor 8 being connected to another/second end 3, 4 of another/second ventilation air duct 1 at this other/second side of wall/floor as seen as examples in figs. 1 and 7B.

The tunnel-shaped penetration element 200 of figs. 1, 7, 7A and 7B comprises an air-proof enclosure and/or walls 210 made of the same fire-resistant material as the first layer of fire-resistant material 110 of the fire and heat protection system 100, which air-proof enclosure 210 has the same function as the air-proof casing 2 of each ventilation air duct 1. The tunnel-shaped penetration element 200 of figs. 1, 7, 7A and 7B comprises an outer or external or exposed flange 220 at each of the ends 201, 202 as shown in figs. 7, 7A and 7B. These flanges 220 are configured to be detachably connected to the flanges 6 of the ventilation air ducts 1. The tunnel-shaped penetration element 200 of figs. 1, 7, 7A and 7B comprises an inner section 221 at each of the ends 201, 202 opposite the flanges 220. The inner sections 221 are configured to connect and hold the air-proof and fire-resistant enclosure 210 tightly together with the flanges 220 of the tunnel-shaped penetration element 200 of figs. 1, 7, 7A and 7B.

In the disclosure, see e.g. figs. 2B, 7A, 8 and 9, the joints 10 between the ends 3, 4 of the ventilation air ducts 1 and/or the ends 201, 202/flanges 220 of the tunnel-shaped penetration elements 200 are held sealingly closed by means of separate connectors or clamping means 30 holding the ends 3, 4 of the ventilation ducts 1 together and/or the ventilation duct ends 3, 4 and the ends 201, 202/flanges 220 of the penetration pieces 200 together.

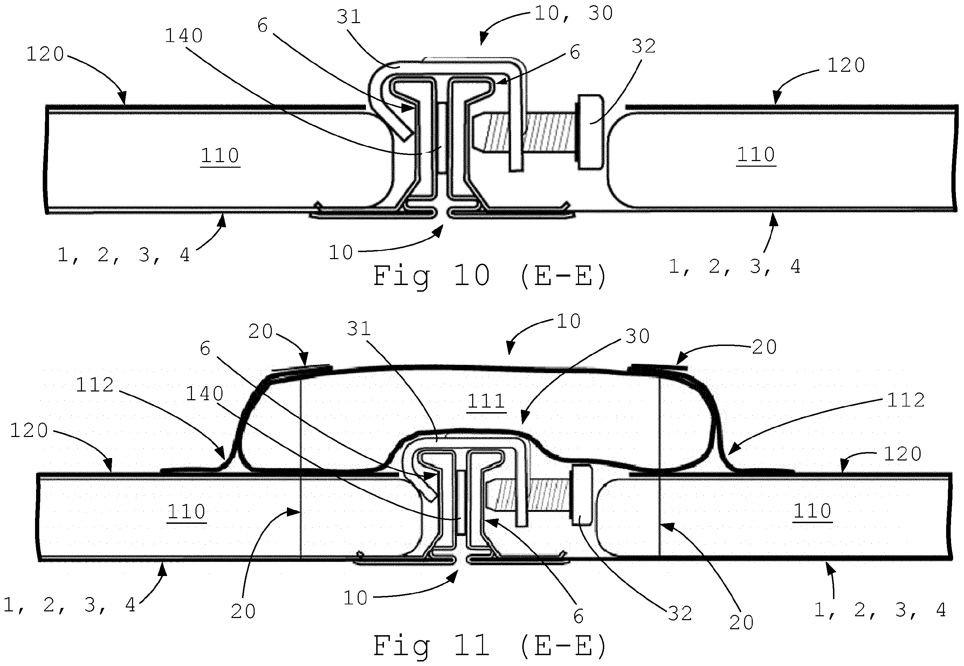

Each connector 30 comprises one or more clamps 31 configured to detachably engage/grip over the flanges 6, 220 on the ends 3, 4 of the ventilation ducts 1 and/or the ends 201, 202/flanges 220 of the tunnel-shaped penetration elements 200 as shown in figs. 2B, 7B, 8, 9, 10 and 11. Each connector 30 comprises one or more fasteners 32 configured to engage the clamps 31 and the flanges 6, 220 to hold/secure the ends 3, 4 of the ventilation ducts 1 and/or the ends 201, 202, i.e. the flanges 220 of the tunnel-shaped penetration elements 200 together. Each fastener 31 of the connectors 30 extends to act/engage the concerned flanges 6, 220 at an angle or inclination of action and/or physical engagement of each fastener 32 against the surface of the flanges 6, 220. This angle corresponds to the longitudinal extension of the fastener 32 being almost or exactly in parallel with the outer surface or extension plane/longitudinal direction of the air-proof casing 2 and/or about perpendicular/90°or exactly perpendicular to the end/radial extension plane or protruding length of the outer flange 220 and/or the inner section 221 and/or the enclosure/walls 210 that extend in a radial direction relative the air-proof casing 2 and the ventilation duct 1 itself. In other words, as shown in figs. 10 and 11, each fastener 32 is a screw and extends along and in parallel with the outer surface of the air-proof casing 2 of the ventilation duct 1 and engages the flanges 6, 220 (from one side of the flange(s) 6, 220 while the clamp(s) 31 acts as an anvil from the other side of the flange(s) 6, 220). In some embodiments not shown, this angle of "attack" for a fastener 32 deviates from or is not perpendicular to or in parallel with the radial protruding extensions of the flange(s) 6, 220 and/or the air-proof casing(s) 2 of the ventilation duct(s) 1.

According to the disclosure, a ductwork assembly 1, made from lower gauge metal 2, with internal conduit supports, and no external outside stiffening bars is constructed. According to the disclosure, insulation 100 is applied that has active ingredients containing endothermic materials to absorb temperature and control the maximum temperature with a barrier at no more than 100°C. The insulation 100 is comprised of two components. The first component is the first layer 110 being a calcium silicate mat or mattress 110 with a density of 350 kg per m³. The calcium silicate mattress 110 has in some embodiments a fiberglass cover or layer 130 to encapsulate the calcium silicate mattress. This calcium silicate mattress 110 has additional crystallized water particles added to the calcium silicate mattress during fabrication. The crystallized water is slowly vapourised and released as water vapour as the temperature rises inside the calcium silicate mattress 110 during a fire incident. The calcium silicate mattress 110 offers the insulation performance of both trapped air and trapped water steam/vapour and/or water molecules. The second layer 120 of material (between 1-5 mm thick, preferably 1.5 - 3 mm thick or most preferred 2 mm thick) is an endothermic layer or blanket or thin covering that covers the first mattress 110 and traps any escaping moisture during temperature increase due to a fire, creating a steam shelf between the air-proof casing 2 and itself. During the heating process occurring in a fire incident, the entrapped water inside the first layer 110 changes state from crystallized water to liquid water to steam/water vapour and back to liquid water by condensation (similar to a boiling pot with lid effect), wherefore a consistent temperature of 100°C is maintained for a prolonged period compared to prior art solutions. When this water transformation process is exhausted, the endothermic material of the second layer 120 reacts to the temperature, and changes state to a ceramic coating, absorbing energy until the process is complete. The endothermic material of one or more second layers 120 and its/their shape and structure are in some embodiments supported by one or more third layers 130 in the form of a fiberglass net over and/or embedded in the material of the second layer 120 to further strengthen the durability of the shape and structure of the endothermic material of the second layer 120 for a prolonged time during a fire. In some embodiments, this process is completed/achieved by utilizing only a total thickness of between 10 - 40 mm of insulation material 100, 110, 120, 130, 160, preferably by utilizing only a total thickness of between 20 - 30 mm of insulation material or most preferred by utilizing only a total thickness of about 27 mm of insulation material. In some embodiments, the 27 mm depth of insulation material 100, 110, 120, 130, 160 surrounding the air-proof casing 2 and/or the joints 10 of the ventilation air ducts 1 and/or the tunnel-shaped penetrators 200 falls below the outer radially protruding dimensions of the flanges 6, 220, i.e. below the radially protruding heights of the flanges 6, 220 of the ventilation air ducts 1 and/or the tunnel-shaped penetration elements 200, which are about 30 mm in height. This provides a much more effective fire, flame and heat protection 100 applied to ventilation air systems than hitherto achieved within the prior art, moreover, the insulation thickness of the fire and heat protection system 100 is also much less than in prior art adding a much more compact and less space demanding fire and heat protection system 100 for ventilation air ducts 1.

The insulation provided by the fire and heat protection system 100 is able to be preinstalled/assembled on/to the ducts 1 as seen in figs. 3 to 6, 7B, 8, 9, 10, 11 and 12 in a factory and extends from one flange end 3 to the other flange end 4 with a gap of about 30 mm on one side at/of one of the flanges 6. The ducts 1 are connected end to end to each other and/or to the ends of the tunnel-shaped penetrations device 200 as shown in figs. 1, 2B, 7B, 8, 9, 10 and 11 using flange clamps 30 with clamps 31 and fasteners 32 distributed correctly and attached over and along the perimeter/circumference of interconnecting flanges 6, 220 at each end 3, 4, 201, 202 of ventilation ducts 1/tunnel-shaped penetrations devices 200 by means of one fastener 32, such as a bolt, for each clamp 31, which fastener is screwed until its free end engages/contacts the flange as seen in figs. 10 and 11, i.e. the same is done for attaching a flange 6 of a ventilation duct 1 to a flange 220 of a tunnel-shaped penetrator 200. The fastener 32 is in some embodiments provided with a thread or screw or bolt head having a ball hex socket or a hexagonal head. This enables a torque drill to fix the clamp 30 safely over and to the flanges 6 without compromising clamping force.

The sealing 140 at the joints 10 is - in some embodiments - one or more single strips of calcium silicate tape with a width of between about 10 - 30 or preferably a width of between about 15 - 25 mm or most preferred a width of about 20 mm or a width of exactly 20 mm and a thickness of between about 1-10 mm or preferably a thickness of between about 2 - 7 mm or most preferred a thickness of about 3 mm or a thickness of exactly 3 mm, which sealing strip 140 is applied between the flanges 6, 220 for air tightness as shown in figs. 10, 11 and 12 when interconnecting the flanges. This has the advantage that no chemicals have to be applied between the flanges 6, 220 at the joints 10. A further advantage of the thin insulation provided by the fire and heat protection system 100 is that the amount of insulation material only being between 25 to 30 mm or about 27 mm or being exactly 27 mm thick reduces the amount of energy required to make the product, i.e. the separate module of a ventilation air duct 1 combined with the fire and heat protection system 100 and any finalized ventilation system in which this module 1, 100 is part of after being detachable assembled therein.

The tunnel-shaped penetration element 200 extending through one or more walls 8 or floors 8 or fire compartments 8 is constructed from non-metal calcium silicate boards 210 between metal ends 201, 202, 220, 221. The unique construction of the tunnel-shaped penetration element 200 creates a break in the thermal conductivity between areas/spaces/rooms and compartments as seen in figs. 1, 7A and 7B, breaking any thermal bridge through the metal elements at each end 201, 202. The tunnel-shaped penetration element 200 is independently supported inside the opening of a wall or floor 8 by way of holes 230 through the thickness of air-proof enclosure 210 through which holes 230 fixings or fastening means 240 extend to attach the tunnel-shaped penetration element 200 securely in the wall or floor opening, see figs. 1, 7, 7A, 7B and 7C. The tunnel-shaped penetration element 200 can be installed before ductwork 1 is assembled onsite in a ventilation air system as shown in fig. 1. The tunnel-shaped penetration element 200 has metal sleeves in the form of the flanges 220 to connect correctly end to end to the ductwork 1, i.e. to the end flange(s) 6 of any ventilation duct 1. The tunnel-shaped penetration element 200 reduces the impact of elevated temperatures across fire compartment walls and floors 8 and between different rooms and spaces of a building or the like further improving the delaying of fire, flame and heat propagation during fire incidents. Usually, the fastening means 240 are screws adapted to extend through the thickness of the air-proof enclosure 210 and through a plate distributing the force from the head of the screws onto the air-proof enclosure when the fastening means 240 are screwed into and tightened against the inside of the hole of the floor or wall 8 through which the tunnel-shaped penetrator 200 extends. In some embodiments, the through hole of the air-proof enclosure 210 where the fastening means 240 are secured is sealed by a fire-resistant medium, such as a sealing compound or the like, to be closed off and delay any penetration of heat, vapour, smoke and/or hot air therethrough and out of the tunnel-shaped penetrator 200.

The fire and heat protection system 100 offers a construction/structure with no external stiffeners and an insulation protection being only about 20 to 40 mm or preferably about 25 to 35 mm or about 30 mm or exactly 27 mm thick including the first layer 110 and the second layer 120 and optionally the third 130 or more layers 160, within the size, i.e. the protruding length of the ductwork flanges 6, 220, requiring no additional space for installation as the insulation provided by the fire and heat protection system 100 does not add to the total space required for installation of the ventilation air ducts 1 and any ventilation air systems comprising those. The tunnel-shaped penetration element 200 offers the possibility of pre-installment and ability to be checked satisfactorily prior to installing a whole ductwork, e.g. ventilation air ducts 1 among other components.

According to the disclosure, a new construct detail 200 is provided to metal ventilation air ducts 1 together with new insulation process relying on endothermic behavior in the fire and heat protection system 100. This reduces the amount of material, in particular the amount and thickness of insulation required to fulfill all demands on fire safety necessary to manage elevated temperatures during fires. This reduces the quantity of utilized materials and energy needed to produce a fire-resistant product 1, 100, 200 when compared to prior art.

### NOMENCLATURE

1: Ventilation air duct(s) made of sheet metal. 2: Air-proof envelope/casing/surface of ventilation duct(s) 1. 3: First open end(s)/inlet(s)/outlet(s) of ventilation duct(s) 1. 4: Second open end(s)/inlet(s)/outlet(s) of ventilation duct(s) 1. 5: Closed end(s) of ventilation duct(s) 1. 6: Flange(s) at/on end(s) of ventilation duct(s) 1. 7: Air flow through one or more ventilation ducts and/or penetration(s)/lead-through(s) 200. 8: Wall(s) and/or floor(s) and/or the like.
10: Joint(s) between end(s) of ventilation duct(s) 1 and/or penetration piece(s) 200.
20: Holder attached to envelope/casing/surface 2 and/or flange 220 of penetration element 200.
30: Connector/Clamping means comprising clamp(s) 31 and fastener(s) 32 holding ends 3, 4 of ventilation ducts 1 together and/or ventilation duct end and end of penetration piece 200 together.
31: Clamp engaging/gripping over flange(s) 6, 220 on ventilation duct(s) 1/penetration piece(s) 200.
32: Fastener engaging clamp(s) 31 and flange(s) 6, 220 to hold/secure ventilation duct(s) 1/penetration piece(s) 200 together along sides and/or at corner(s) of flange(s) 6, 220.
33: Fastener for attaching insulation strip(s) 111 to floor/wall 8.
100: Fire and heat protection wrapping/enclosing/coverage/encapsulating system(s).
110: One/First/Inner layer(s) of fire-resistant insulation material(s) being flexible wrap with a width corresponding to about the length of the ventilation duct and configured to have or be cut to about same length as the perimeter of outer circumference of casing 2 of the ventilation duct.
111: Elongated slab or strip or slip made of same material and with same thickness as first layer 110 with a lesser/smaller width than first layer 110 and configured to have or be cut to a length corresponding to about the perimeter of outer circumference of end flange(s) 6, 220.
112: Fire resistant adhesive tape used for closing/sealing joints 150/170 and attaching elongated strip 11 partly to and over adjoining layer(s) 120/130.
120: Another/Second/intermediate/Outer layer(s) of fire-resistant and flexible and water impervious material(s).
130: Third/Outer/Embedded layer(s) of fire-resistant, flexible material(s), e.g., glass fibre/fibreglass/net of glass fibre/fiberglass. 140: Sealing strip(s) at/in joint(s) 10.
150: Joints between ends of the first layer(s) of fire-resistant material(s) 110.
160: Fourth or Fifth or Intermediate or Outer layer(s) of fire-resistant/-reflective/flexible material(s), such as aluminum foil(s).
170: Joint(s) between ends of the other/second/intermediate/outer layer(s) 120.
200: Penetration piece(s)/element(s) or lead-through(s) forming fire-resistant channel(s)/tunnel(s).
201: First open end(s)/inlet(s)/outlet(s) of penetration piece(s) 200.
202: Second open end(s)/inlet(s)/outlet(s) of penetration piece(s) 200.
210: Air-proof enclosure/walls of penetration device 200 being self-supporting walls made of tightly joined stiff/rigid/hard/form/shape stable plates of same fire-resistant material as first layer 110.
220: Outer/External/Exposed flange(s) forming outer attachment section(s) at/on end(s) of penetration device(s) 200.
221: Inner section(s) of end(s) of penetration device(s) 200 opposite flange(s) 220.
230: Opening/Hole through the thickness of the air-proof enclosure/walls 210.
240: Fastening means to attach the air-proof enclosure/walls 210 of penetration device in a hole/opening through the wall and/or floor 8.

## Claims

1. A fire and heat protection system (100) for covering one or more ventilation air ducts (1) made of sheet metal forming an air-proof casing (2), the fire and heat protection system (100) comprising at least two layers (110, 120) of materials configured to be arranged around the ventilation air duct (1) as insulation, wherein the at least two layers (110, 120) are made by different materials or made by different compositions of the same material, wherein one or more first layers (110) and/or one or more second layers (120) are configured to encapsulate the ventilation air duct(s) (1), which first layer (110) comprises an insulation material with a low thermal conductivity, and which second layer (120) is configured to be arranged in close proximity with or in contact with the first layer (110) and which second layer is made of a material making the second layer flexible enabling the second layer (120) to be wrapped over and around the first layer (110) and the ventilation duct (1),
**characterized in that** the material of the second layer (120) is impervious to liquid water and water vapour and configured to - when subjected to heat - undergo an endothermic reaction process,
that the insulation material of the first layer (110) comprises crystallized water particles that - when subjected to heat - are vapourised and released as water vapour in proportion to increase of heat and/or temperature and condensed in proportion to decrease of heat and/or temperature, whereby the water vapour impervious second layer (120) retains water vapour and any condensed water between the second layer (120) and the air-proof casing (2) and inside the fire and heat protection system (100).

2. The fire and heat protection system (100) according to claim 1, wherein the first layer (110) is made of a material being at least partly made or mostly made or fully made of calcium silicate, Ca₂SiO₄, comprising the crystallized and/or embedded water particles/molecules.

3. The fire and heat protection system (100) according to claim 1 or 2, wherein the insulation material of the first layer (110) is a high-strength insulation material with a low thermal conductivity below about 600 - 650°C/degrees Celsius.

4. The fire and heat protection system (100) according to any preceding claim, wherein at least a third material (130) is arranged in close proximity with or in contact with the second layer (120) and which third layer (130) comprises a material configured to increase the durability and pressure resistance/proof of the second layer (120).

5. The fire and heat protection system (100) according to claim 4, wherein the third material (130) together with the second layer (120) is arranged at least partly over and around the first layer (110) and the ventilation duct (1).

6. The fire and heat protection system (100) according to claim 4 or 5, wherein the second layer (120) comprises at least partly the third material (130) and/or the third material (130) is at least partly or fully integrated or embedded in the second layer (120).

7. The fire and heat protection system (100) according to any of claims 4 to 6, wherein the third material (130) is shaped as a layer and at least partly comprises glass fibre/fibreglass.

8. The fire and heat protection system (100) according to any of claims 4 to 7, wherein the third material (130) is at least partly shaped as a net of glass fibre/fibreglass.

9. The fire and heat protection system (100) according to any preceding claim, comprising one or more tunnel-shaped devices (200) for penetrating or extending through one or more walls (8) and/or floors (8) for enabling ventilation air (7) to flow from one or more ventilation ducts (1) at one side of the wall and/or floor to one or more ventilation ducts (1) at the other side of the wall and/or floor.

10. The fire and heat protection system (100) according to claim 9, wherein each tunnel-shaped penetration device (200) is made of an air-proof enclosure (210) interconnecting two ends (201, 202), a first end (201) and a second end (202), wherein each of these ends (201, 202) comprises a metal flange (220) configured to be connected to a ventilation air duct (1), and the air-proof enclosure (210) between the two ends (201, 202) of each tunnel-shaped penetration device (200) is stable in form and shape and made of the same material and/or material composition as the first layer (110) of the fire and heat protection system (100).

11. The fire and heat protection system (100) according to any preceding claim, wherein the first layer (110) is configured to be arranged in close proximity with or in contact with the air-proof casing (2) of the ventilation duct (1), which first layer is flexible and has a mat or mattress shape enabling wrapping the first layer (110) over and around the air-proof casing (2) of the ventilation duct (1) and having ends forming only one joint (150) extending along the length of the ventilation duct by abutting end to end after wrapping.

12. The fire and heat protection system (100) according to any preceding claim, wherein the second layer (120) is configured to be arranged in close proximity with or in contact with the first layer (110) wrapped around the ventilation duct (1), which second layer is made as a flexible blanket or thin covering configured to be wrapped over and around the first layer (110) and having ends forming only one joint (170) extending along the length of the ventilation duct by abutting end to end after wrapping.

13. The fire and heat protection system (100) according to any preceding claim, wherein each joint (10) between each end (3, 4) and flange (6) of each ventilation duct (1) - after joining together the ventilation duct to another ventilation duct end-to-end and after each ventilation duct and air-proof casing (2) are encapsulated by the first and second layers (110, 120) - is configured to be covered by a separate and flexible elongated insulation strip (111) of the same insulation material as the first layer (110).

14. The fire and heat protection system (100) according to any of claims 1 to 8 and 10 to 13 and claim 9, wherein each joint (10) between each end (201, 202) and flange (220) of each tunnel-shaped penetration device (200) and each end (3, 4) and flange (6) of each ventilation duct (1) - after joining together each ventilation duct and each tunnel-shaped penetration device (200) end-to-end and after each ventilation duct and air-proof casing (2) are encapsulated by the first and second layers (110, 120) - is configured to be covered by a separate and flexible elongated insulation strip (111) of the same insulation material as the first layer (110) at each end of the floor/wall (8).

15. The fire and heat protection system (100) according to claim 13 and/or 14, wherein each separate and flexible elongated insulation strip (111) is configured to at least partly cover each end (3, 4) of each ventilation duct (1) and/or each end (201, 202) of each tunnel-shaped penetration device (200) and/or each floor/wall (8).

16. The fire and heat protection system (100) according to any preceding claim, wherein each joint (10) between each ventilation air duct (1) and/or between each ventilation air duct (1) and each tunnel-shaped penetration device (200) comprises one or more sealing strips (140) arranged between the flange(s) (6, 220) at each joint, each sealing strip (140) being made of the same material and/or material composition as the first layer (110) and having an adhesive at at least one side to enable fastening to at least one flange.

17. A ventilation air duct (1) for being part of a fire and heat protection system (100) according to any preceding claim, which ventilation air duct (1) is made of sheet metal forming an air-proof casing (2) and encapsulated by the fire and heat protection system (100) comprising at least two layers (110, 120) of materials covering the ventilation air duct (1) as insulation, wherein the at least two layers (110, 120) are made by different materials or made by different compositions of the same material, wherein one or more first layers (110) and/or one or more second layers (120) encapsulate the ventilation air duct (1), the first layer (110) comprising an insulation material with a low thermal conductivity, and the second layer (120) being configured to be arranged in close proximity with or in contact with the first layer (110), which second layer is made of a material making the second layer flexible enabling wrapping the second layer (120) over and around the first layer (110) and the ventilation duct (1), **charact erized** in that the material of the second layer (120) is impervious to liquid water and water vapour and configured to - when subjected to heat - undergo an endothermic reaction process,
that the insulation material of the first layer (110) comprises crystallized water particles that - when subjected to heat - are vapourised and released as water vapour in proportion to increase of heat and/or temperature and condensed in proportion to decrease of heat and/or temperature, whereby the water vapour impervious second layer (120) retains water vapour and any condensed water between the second layer (120) and the air-proof casing (2) and inside the fire and heat protection system (100).

18. The ventilation air duct (1) according to any preceding claim, wherein the first and second layers (110, 120) of the fire and heat protection system (100) are separate layers.

19. The ventilation air duct (1) according to any preceding claim, wherein the air-proof casing (2) comprises at least one outer/external holder (20) configured to enable the first and second layers (110, 120) and third layer(s) (130) of the fire and heat protection system (100) to be attached/securely held to the outside of the ventilation air duct (1).

20. The ventilation duct (1) according to any of claims 17 to 19, wherein the first layer (110) comprises a high-strength insulation material with a low thermal conductivity below about 600 - 650°C/degrees Celsius.

21. The ventilation duct (1) according to any of claims 17 to 20, wherein the first layer (110) is configured to be arranged in close proximity with or in contact with the air-proof casing (2) of the ventilation duct (1), which first layer is flexible and has a mat or mattress shape enabling wrapping the first layer (110) over and around the air-proof casing of the ventilation duct and having ends forming only one joint extending along the length of the ventilation duct by abutting end to end after wrapping.

22. The ventilation duct (1) according to any of claims 17 to 21, wherein the second layer (120) is configured to be arranged in close proximity with or in contact with the first layer (110) wrapped around the ventilation duct (1), which second layer is made as a flexible blanket or thin covering configured to be wrapped over and around the first layer (110) and having ends forming only one joint (170) extending along the length of the ventilation duct by abutting end to end after wrapping.

23. A tunnel-shaped device (200) for use in the fire and heat protection system (100) according to any of the claims 1 to 16 and/or together with the ventilation air duct (1) according to any of the claims 17 to 22, wherein the tunnel-shaped device (200) comprises an air-proof and fire resistant enclosure (210) and is configured to penetrate or extend through one or more walls (8) and/or floors (8) for enabling ventilation air (7) to flow from one or more ventilation ducts (1) at one side of the wall and/or floor to one or more ventilation ducts (1) at the other side of the wall and/or floor.

24. The tunnel-shaped device (200) according to claim 23, wherein the air-proof enclosure (210) of the tunnel-shaped penetration device (200) is configured to interconnect two ends (201, 202), a first end (201) and a second end (202), wherein each of these ends (201, 202) comprises a metal flange (220) configured to be connected to a ventilation air duct (1), and the air-proof enclosure (210) between the two ends (201, 202) of each tunnel-shaped penetration device (200) is stable in form and shape and made of the same material and/or material composition as the first layer (110) of the fire and heat protection system (100).

25. The tunnel-shaped device (200) according to claim 24, wherein the air-proof enclosure (210) between the two ends (201, 202) of each tunnel-shaped penetration device (200) is made of stiff and/or rigid and/or hard plates tightly joined together to form the air-proof enclosure (210), which plates are made of the same material and/or material composition as the first layer (110) of the fire and heat protection system (100) and/or the ventilation air duct (1).

26. The tunnel-shaped device (200) according to any of claims 23 to 25, wherein the tunnel-shaped device (200) comprises at least two through holes (230) in at least each of two opposite sides of the air-proof and fire resistant enclosure (210), which at least four through holes (230) are configured to receive at least one fastener (240) each extending through the thickness of the air-proof and fire-resistant enclosure (210) to enable secure fastening of the tunnel-shaped device (200) to the floor/wall (8).
